# EUROPEAN PATENT APPLICATION

(11) **EP 2 741 208 A1**
(43) Date of publication of application: **11.06.2014**
(21) Application number: 13193993.6
(22) Date of filing: 22.11.2013
(51) Int. Cl.: G06F 9/445, G06Q 30/06

(54) **Method for providing application information and mobile terminal thereof**

(30) Priority: 06.12.2012 KR 20120141290
(71) Applicant: Samsung Electronics Co., Ltd, Gyeonggi-do 443-742 (KR)
(72) Inventor: Lee, Kwangbin, 443-742 Gyeonggi-do (KR); Jeon, Yongjoon, 443-742 Gyeonggi-do (KR)
(74) Representative: Jenkins, Richard Gavin

(57) **Abstract**

The method for recommending applications in a mobile terminal configured to access an application market server includes transmitting an application information request message to the application market server, receiving information on applications which have never been installed on the mobile terminal but are related to an installed application and/or installation information on applications which have at least once been installed on the mobile terminal and displaying the received information.

## Description

### TECHNICAL FIELD

This disclosure relates to a method for providing application information and a mobile terminal thereof, and more particularly, to a method for providing a user with application information received from an application market server.

### BACKGROUND

An online application market is activated since a mobile terminal such as a smart phone is widely available. The mobile terminal may display application information received from an application market server over network. The application information may contain detailed description, a type (e.g. a game, a music and so on), a screen shot (e.g. an execution screen related to the application), price information, a popularity order, sales ranking, a version, grade, manufacturer information and developer information. Users who only have the information, however, are not easy to realize what to do with the application and that the application is necessary. Thus, it is required to provide additional information for the user.

### SUMMARY

To address the above-discussed deficiencies, it is a primary object to provide a user with application information easily understood.

In accordance with an aspect of this disclosure, a method for providing application information in a mobile terminal configured to access application market server includes transmitting an application information request message to the application market server, receiving information on application not installed and at least one installing application information related to the information on application not installed from the application market server, displaying the information on application not installed, detecting an request event which requests the installing application information, and displaying the installing application information upon detecting the request event.

In accordance with another aspect of this disclosure, a method for providing application information in a mobile terminal configured to access an application market server includes transmitting an application information request message to the application market server, displaying information on application not installed, received from the application market server, detecting a request event to request installing application information, choosing an application related to the information on application not installed among the applications installed on the mobile terminal upon detecting the event, and displaying the chosen application information.

In accordance with another aspect of this disclosure, a method for providing application information in a mobile terminal configured to access an application market server includes transmitting a first request message requesting application information to the application market server, displaying information on application not installed, received from the application market server, detecting a request event requesting installing application information related to the information on applications not installed, transmitting a second request message requesting the installing application information related to the information on application not installed to the application market server when the request event is detected, and displaying at least one installing application information received from the application market server.

In accordance with another aspect of this disclosure, transmitting a first request message to request application information to the application market server, displaying information on application not installed, received from the application market server, detecting a request event to request for installing application information related to the information on applications not installed, transmitting a second request message to request the installing application information related to the information on application not installed to the application market server when the request event is detected, receiving at least one installing application information from the application market server; determining information to display among the at least one installing application information by using pre-stored use pattern information, and displaying the determined installing application information.

In accordance with another aspect of this disclosure, a method for providing application information in a mobile terminal configured to access an application market server includes transmitting a request message to request installing application information to the application market server, receiving the installing application information and at least one of information on application not installed related to the installing application information from the application market server, displaying the installing application information; detecting a request event to request the information on application not installed; and displaying the information on application not installed when the request event is detected.

In accordance with another aspect of this disclosure, a mobile terminal configured to access an application market server includes a wireless communication unit to transmit an application information request message to the application market server, and to receive information on application not installed and at least one installing application information related to the information on application not installed from the application market server, a display unit to display the information on application not installed; an input unit to detect a request event to request the installing application information, and a controller to control the display unit to display the installing application information when the request event is detected.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a high level block diagram of a mobile terminal illustrating a configuration according to an embodiment of the disclosure;
FIG. 2 is a flowchart illustrating a method for providing application information according to one embodiment of the disclosure;
FIGS. 3A and 3B show a display example of application information according to one embodiment of the disclosure;
FIG. 4 is a flowchart illustrating a method for providing application information according to another embodiment of the disclosure;
FIG. 5 is a flowchart illustrating a method for providing application information according to another embodiment of the disclosure;
FIG. 6 is a flowchart illustrating a method for providing application information according to another embodiment of the disclosure;
FIG. 7 is a flowchart illustrating a method for providing application information according to another embodiment of the disclosure;
FIGS. 8A and 8B show a display example of application information;
FIG. 9 is a flowchart illustrating a method for providing application information according to another embodiment of the disclosure; and
FIG. 10 is a flowchart illustrating a method for providing application information according to another embodiment of the disclosure.

### DETAILED DESCRIPTION

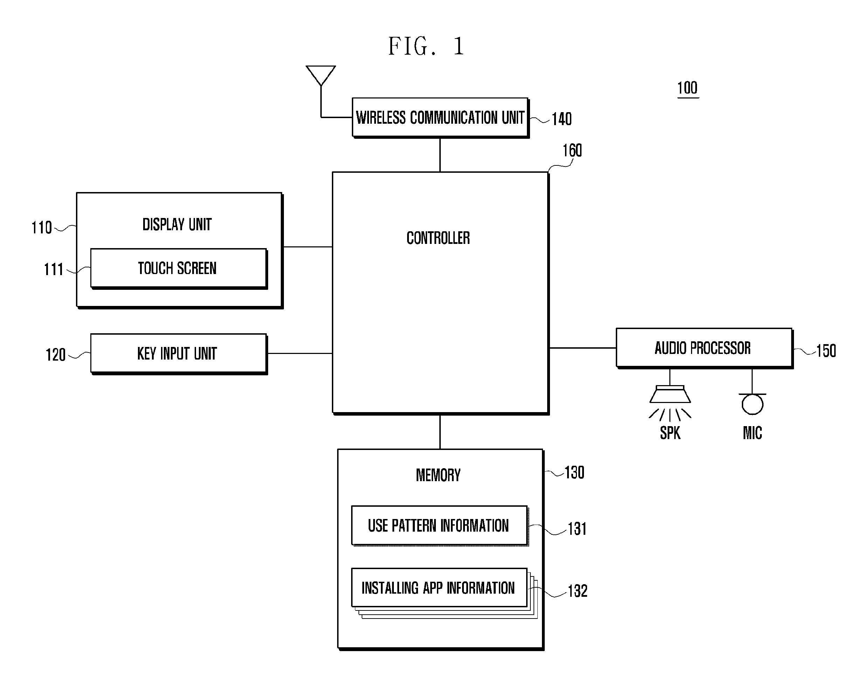

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices.

Exemplary embodiments of the disclosure are described with reference to the accompanying drawings in detail. The same reference numbers are used throughout the drawings to refer to the same or like parts. Detailed descriptions of well-known functions and structures incorporated herein may be omitted to avoid obscuring the subject matter of this disclosure.

An application market server may offer a free or a charged application (hereinafter referred as app). These apps are classified as an installing app and an app not installed according to installation of the app on the mobile terminal. In this disclosure, installing app information may include information related to an app which is received from an app market server and installed on the mobile terminal. In addition, the installing app information may further include information related to an app which was installed on the mobile terminal, but is deleted now. Moreover, the installing app information may further include information related to an app which is basically installed on the mobile terminal. Information on apps not installed according to this disclosure refers to the apps which are able to be purchased from the app market server, and particularly can include information related to an app which has never installed on a mobile terminal. The installed app information is managed by identification information in the web market server. The identification information is information to identify users, for example, an email address, a mobile phone number and the like. For example, a mobile terminal can transmit a message for request of an app purchase to the app market server. In response, the app market server can transmit a message of requesting login information containing identification information and a password to the mobile terminal. Accordingly, the mobile terminal can transmit a message containing the login information to the app market server. The app market server checks a password corresponding to the identification information (e.g., an e-mail address) received from the mobile terminal in a user database and compares the checked password with the received password. When the two passwords are identical, the app is received and installed on the mobile terminal. The app market server can manage the app as the installing app. Meanwhile, the installing app information can be independently managed in the mobile terminal.

A use pattern information according to this disclosure means information related to a pattern that a user uses the installing app. For example, the use pattern information can contain a late using period (e.g. a completed point after last use) and frequency of use (e.g. the number of average use for one week) according to the installing app. The use pattern information is managed by the mobile terminal. A controller of the mobile terminal performs an application in response to the request of the user, and checks a time point of execution, a time point of termination, and the number of execution of the application, and stores the checked information as the use pattern information in a memory. Moreover, the use pattern information can be transmitted to the app market server to manage.

The mobile terminal according to this disclosure is a device configured to access a server (especially an app market server) via network, such as a mobile phone, a smart phone, a tablet PC, a laptop PC and so an. Hereinafter, a method for providing application information of a mobile terminal according to this disclosure is described in detail.

FIG. 1 is a block diagram of a mobile terminal illustrating a configuration according to an exemplary embodiment of the disclosure.

Referring to FIG. 1, the mobile terminal 100 according to this disclosure includes a display unit 110, a key input unit 120, a memory 130, a wireless communication unit 140, an audio processor 150, a speaker (SPK), a microphone (MIC), and a controller 160.

The display unit 110 can display data under control of the controller 160. The controller 160 can store the data in a buffer by rendering the data. The display unit 110 can display an analog signal which is converted from data stored in the buffer. The display unit 110 can display various screens corresponding to usage of the mobile terminal 100, for examples, a locked screen, a home screen, an execution screen of an app, a key pad screen and the like. The locked screen is a screen displayed on the display unit 110 when the display unit 110 is turned on. Upon detection of a touch input or a key input to release the lock, the controller 160 can control the display unit 110 to display a home screen or an app execution screen instead of the locked screen. The home screen includes a background image and a plurality of icons displayed on the background image. The icons correspond to apps respectively. When one of the icons is selected by a user (e.g., tap the icon), the controller 160 implements the app (e.g., an app to access an app market server) and controls the display unit 110 to display the execution screen (e.g., a recommendation app list, an installing app list, a popular app list, detailed information of an app and the like received from the app market server). Under control of the controller 160, the display unit 110 displays one of the above mentioned screens, for example, the app execution screen as a background and then overlaps another screen, for example, the keypad screen as a foreground over the background. Moreover, the display unit 110 can display a first image on a first area and a second image on a second area under control of the controller 160. The display unit 110 can be configured of a liquid crystal display (LCD), an organic light emitted diode (OLED), an active matrix organic light emitted diode (AMOLED), or a flexible display.

The touch screen 111 is placed on the display unit 110. Specifically, the touch screen 111 is implemented as an add-on type located in the front of the display 110, or an on-cell type or an in-cell type embedded on the display unit 110.

The touch screen 111 can generate an analog signal such as a touch event in response to a user gesture for the touch screen 111 and converts an analog signal into a digital signal for transmission to the controller 160. The touch event includes a touch coordinate (x, y). When the touch coordinate is received from the touch screen 111, the controller 160 determines that a touch input pointer (such as a finger or a pen) touches on the touch screen 111 and, when the touch coordinate is not received, the controller determines this as a touch release. Moreover, the controller 160 considers that the touch is moved when the touch coordination is changed, for example, from (x1, y1) to (x2, y2). The controller 160 calculates displacement amount (dx, dy), velocity and the like in response to the touch movement. The controller 160 considers the user gesture to be one of a touch, a multi-touch, a tap, a double-tap, a long tap, a tap & touch, a drag, a flick, a press, a pinch-in, and a pinch-out based on a touch coordinate, release of the touch, movement of the touch, the displacement amount of the touch, and the velocity of the touch. The touch is a gesture that a touch input pointer is touched to one point of a touch screen 111, and the multi-touch is a gesture that a plurality of input pointers (e.g., both thumb and point finger) are touched to multiple points. In addition, the tap is a gesture that is performed with touch-off at a corresponding point without any movement after touch of the touch input pointer at a certain point of the screen, and the double tab is a gesture that is performed with continuous twice tabs at a certain point, and the long tab is a gesture that is performed with touch-off at a corresponding point without any movement after a touch of the touch input pointer which is relatively longer than a tap. The tap and touch is a gesture that is performed with re-touch within a predetermined time (e.g., 0.5 sec) to the point after tap on a point of the screen, the drag is a gesture that is performed with movement of the touch input pointer to predetermined direction on touching to a certain point, and the flick is a gesture that is performed with release of the touch after a rapid movement compared with the drag. Moreover, the press is a gesture that is performed with press of the point after touch at a point, and the pinch-in is a gesture that is performed with closing the interval of the two touch input pointers together after multi-touch of the two touch input pointer on two points at the same time, and the pinch-out is a gesture that is performed with broadening the interval of the two touch input pointers. In other words, the touch refers to a gesture is performed with a contact status of the touch screen 111, and the other gestures refer to variation of the touch. The touch screen 111 can include a pressure sensor to detect pressure at a touched point. The detected pressure information is transmitted to the controller 160 and the controller 160 separately recognizes the touch and the press based on the detected pressure information.

The touch screen 111 can be a complex touch panel which is configured of a hand touch panel detecting hand gestures and a pen touch panel detecting pen gestures. The hand touch panel is implemented by a capacitive type. The hand touch panel can also be implemented by a resistive type, an infra red type, or an ultra sonic wave type. Moreover, the hand touch panel can generate touch events by not only gestures of a user's hand but also other instruments (e.g., conductive material which can cause the change of capacity). The pen touch panel can be configured of an electromagnetic induction type. Accordingly, the pen touch panel can generate the touch events by a stylus pen for touch which is specially manufactured to form a magnetic field.

The key input unit 120 includes a plurality of keys to input numbers or letters and set various functions. Such keys can include a menu list key, a screen on/off key, a power on/off key, and a volume control key. The key input unit 120 can generate and transmit a key event related to a user setting and a function control of the mobile terminal 100 to the controller 160. The key event can include a power on/off event, a volume control event, a screen on/off event, a shutter event and so on. The controller 160 can control the above mentioned elements in response to the key events. On the other hand, a key of the key input unit 120 can be named as a hard key and a virtual key displayed on the display unit 110 can be named as a soft key.

The memory 130 is a secondary memory of the controller 160 and includes a disk, a RAM, a ROM, a flash memory, and so on. The memory 130 can store use pattern information 131 and installing app information 132 corresponding to each application which is installed on the mobile terminal 100. In addition, the memory 130 can store a booting program, an operating system (OS), and applications. As well known, the operating system serves as an interface between hardware and an application and between applications, and manages a computer resource such as a CPU, a GPU, a main memory, and a secondary memory and so on. The operating system can control an operation of the hardware and an execution of the application, determines order of tasks, controls a calculation of the CPU and the GPU, and manages to store data and files. The applications are classified into an embedded application and a third party application. For example, the embedded application includes a web browser, an email program, and an instant messenger and so on. The third party application is an application which is received from the app market server to the mobile terminal 100 and installed on the mobile terminal. The third party application is classified into a native app and an open app (e.g., a web app) according to runtime. As well known, the Wholesale Applications Community (WAC) is an organization which is established by various telecommunication developers of all countries of the world to develop and distribute an open app which can be distributed regardless of a terminal manufacturer, an operating system developer, and a telecommunication developer. The web app is an app developed based on the web technology for accomplishing the purpose of the WAC. The web app is able to be performed by a web browser regardless of the operation system. In comparison, the native app is performed based on a specific operation system (e.g., an iOS, a baba OS, an Android). That is, the native app is performed on not other operating system but a specific operating system (e.g., iOS). When the power is supplied to the controller 160 of the mobile terminal 100, a booting program is loaded to the main memory (e.g., RAM) of the controller 160. The booting program loads the operating system to the main memory. The operating system loads an application on the main memory. At this moment, the native app performs based on the operating system and the web app performs while the web browser operates.

Moreover, the memory 130 can include a speech to text (STT) program that converts voice data into text.

The wireless communication unit 140 performs a voice call, a video call, or data communication with an external device through a network under control of the controller 160. The wireless communication unit 140 includes a radio frequency transmitter which performs up-conversion and amplification of a frequency of a transmitted signal, and a radio frequency receiver performs low-noise-amplification and down-conversion of the frequency of the transmitted signal. Moreover, the wireless communication unit 140 includes a mobile communication module (e.g., 3-Generation, a 3.5-Generation, or a 4-Generation mobile communication module, and the like), a digital broadcasting module (e.g. a DMB module), and a local communication module (e.g. a wifi module, a Bluetooth module, and a near field communication (NFC) module).

The audio processor 150 is connected to a speaker (SPK) and a microphone (MIC) and performs input and output of an audio signal (e.g., voice data) for recognition of voice, record of the voice, digital recording, and communication. The audio processor 150 receives an audio signal from the controller 160, and amplifies and output to the speaker after A/D conversion of the received audio signal to an analog signal. The audio processor 150 provides the controller 160 with the digital signal converted from the audio signal which is transferred from the microphone (MIC). The speaker outputs a sound wave converted from the audio signal which is received from the audio processor 150. The microphone converts a sound wave transmitted from a human being or other sound sources into the audio signal.

The controller 160 can control overall operations of the mobile terminal 100 and a signal flow between inner elements of the mobile terminal 100, and performs the function of processing data, and controls to supply power for the elements from a battery. The controller 160 includes a central processor (CPU) and a graphic processor (GPU), and the like. As we well known, the CPU is an essential control unit of a computer system to perform calculation and comparison of data, and analysis and execution of a command, and the like. The GPU is a graphic control unit which performs a calculation and a comparison of the data related to the graphics, and an analysis and an execution of the command. The CPU and the GPU can be integrated to one package in which two or more independent cores (e.g., a quad-core) are configured to a signal integral circuit. Moreover, the CPU and the GPU can be implemented as one chip such as a system on chip (SoC). The CPU and the GPU can be packaged with a multi-layer structure. The configuration including the CPU and the GPU can be named as an application processor (AP).

The controller 160 includes a main memory such as a RAM. The main memory can store all kinds of programs, for example, a booting program, operating systems, and applications which are loaded from the memory 130. The CPU and the GPU of the controller 160 access and decode the command of above mentioned programs and then perform function according to the decoding result. Moreover, the main memory temporarily stores data to be written in the memory 130 and data read from the memory 130. A cash memory can be additionally implemented on the mobile terminal 100 as a temporary data storage.

A distinguishing operation related to this disclosure of the controller 160, that is, the providing of app information is described below in detail with reference to drawings.

On the other hand, modification of digital devices according to a trend of convergence is too various to list all of them, but the mobile terminal 100 further includes configurations which are not mentioned above such as a GPS module, a vibration motor, a camera, an accessory, an external interface unit (e.g. an earphone jack) and the like. The accessory is a component separable from the mobile terminal 100, for example, a pen for touching a touch screen. Moreover, the mobile terminal 100 can be configured without specific elements among the above mentioned configurations or substituted by other elements according to a providing shape.

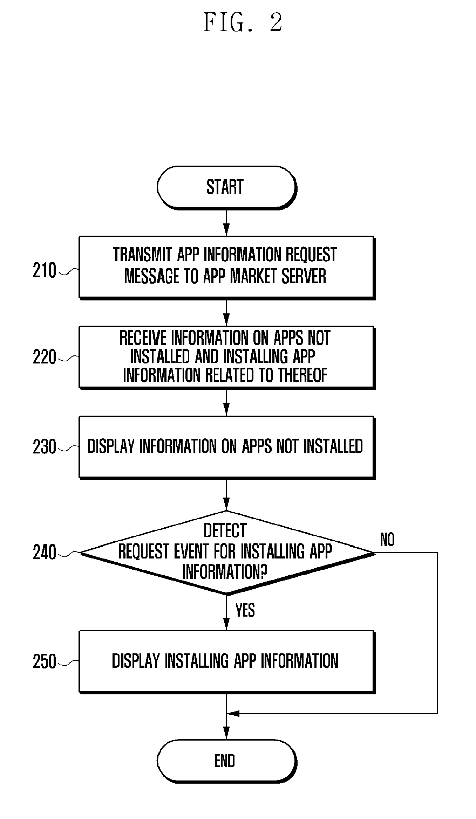

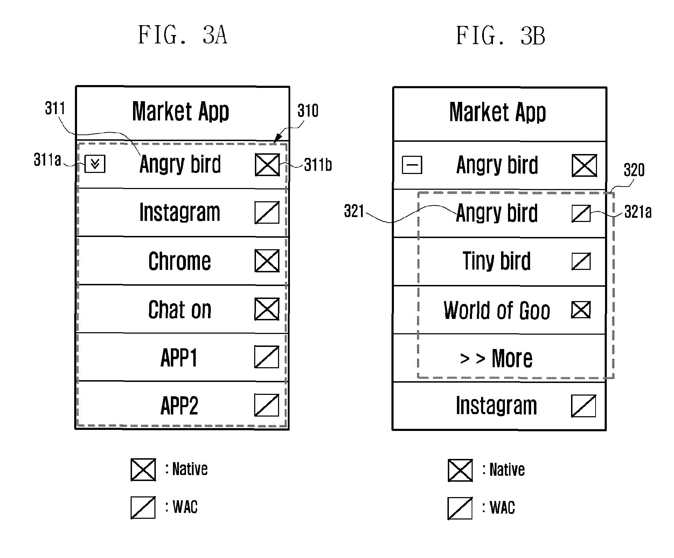

FIG. 2 is a flowchart illustrating a method for providing application information according to one embodiment of the disclosure, and FIG. 3A and 3B show display examples of application information.

First, an app to access a web market server is performed by a user. For example, a display unit 110 displays a home screen under control of the controller 160. The controller 160 can detect a selection of the user (e.g., a tap) corresponding to an app store icon displayed on the home screen. The controller 160 can control the wireless communication unit 140 to log in the web market server in response to the selection of the user. That is, the wireless communication unit 140 can transmit a log-in request message including identification information and a password to the web market server. The web market server checks the password corresponding to the e-mail address received from the mobile terminal 100 in a user database and compares the checked password with the received password. When the two passwords are identical, the web market server approves the log-in request of the mobile terminal 100 and transmits a home page including a recommendation button, a chart button, a purchase list button, a search button and the like to the mobile terminal 100. The wireless communication unit 140 receives the home page from the web market server and transfers the home page to the controller 160. The controller 160 can control the display unit 110 to display the home page.

Referring to FIG. 2, at operation 210, the controller 160 can control the wireless communication unit 140 to transmit an app information request message to the app market server. For example, when user taps a recommendation button, the controller 160 can control the wireless communication unit 140 to transmit a message requesting a recommendation list to the app market server. In response to this, the app market server can transmit a list including a plurality of the recommendation app information to the mobile terminal 100. The recommendation app information is classified into information on apps not installed and installed app information based on the identification information. In other words, the recommendation app information can be the information on all apps not installed or includes one or more installed app information. Moreover, the app market server can transmit not only the recommendation list but also installed app information related to the information on apps not installed to the mobile terminal 100. The app market server determines information related to information on apps not installed among the installed app information based on the information on apps not installed. For example, when a kind of the apps not installed is game, the app market server can transmit installed app information related to the game among the installed app information to the mobile terminal 100.

At operation 220, the controller 160 receives the information on apps not installed and the installed app information related to the information on apps not installed from the app market server through the wireless communication unit 140.

At operation 230, the controller 160 can control the display unit 110 to display the received information on apps not installed. Referring to FIG. 3A, the display unit 110 displays an application list 310. 'Angry bird 311' of the application list 310 is relevant to the information on apps not installed.

At operation 240, the controller 160 detects an event requesting the installing apps information. The request event can correspond to user's gesture on the touch screen 111 (e.g., a tap of "a view button 311a for display of the installing app information" displayed on the display unit 110). In addition, the request event can correspond to a key event generated by a key input unit 120. The request event can be audio data. In other words, the microphone (MIC) can transmit an audio signal converted from user's voice to the audio processor 150, and the audio processor 150 can A/D convert the audio signal received from the microphone (MIC) into a digital signal and transmit to the controller 160. The controller 160 receives the audio data from the audio processor 150, and converts the received audio data to a text, and determines that the request event is detected when, for example, "installation" is included in the text.

Upon detecting the request event, at operation 250, the controller 160 can control the display unit 110 to display the received installing app information. Thus, the user can intuitively understand which one is the application not installed through the displayed installing app information. Referring to FIG. 3B, the display unit 110 displays the installing app list 320 related to 'Angry bird 311'.

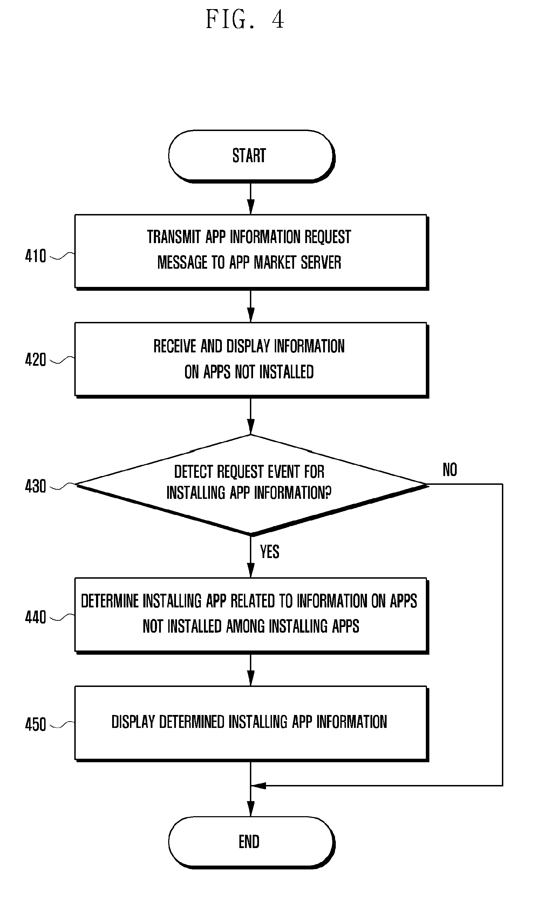

FIG. 4 is a flowchart illustrating a method of providing application information according to another exemplary embodiment of the disclosure.

Referring to FIG.4, at operation 410, the controller 160 can control the wireless communication unit 140 to transmit an app information request message to an app market server.

At operation 420, the controller 160 receives the information on apps not installed from the app market server through the wireless communication unit 140 and controls a display unit 110 to display the information on apps not installed.

At operation 430, the controller 160 detects a request event of the installing app information.

Upon detecting the request event, at operation 440, the controller 160 reads the installing app information 132 from a memory 130, and determines the installing app related to the information on apps not installed, among the installed apps by using the read installing app information 132. For example, when a manufacturer of the app not installed is "A company", the controller 160 determines the installing app information 132 corresponding to the "A company" among the read installing app information as the installing app information to display. At operation 450, the controller 160 can control the display unit 110 to display the determined installing app information (e.g., a name and a thumbnail).

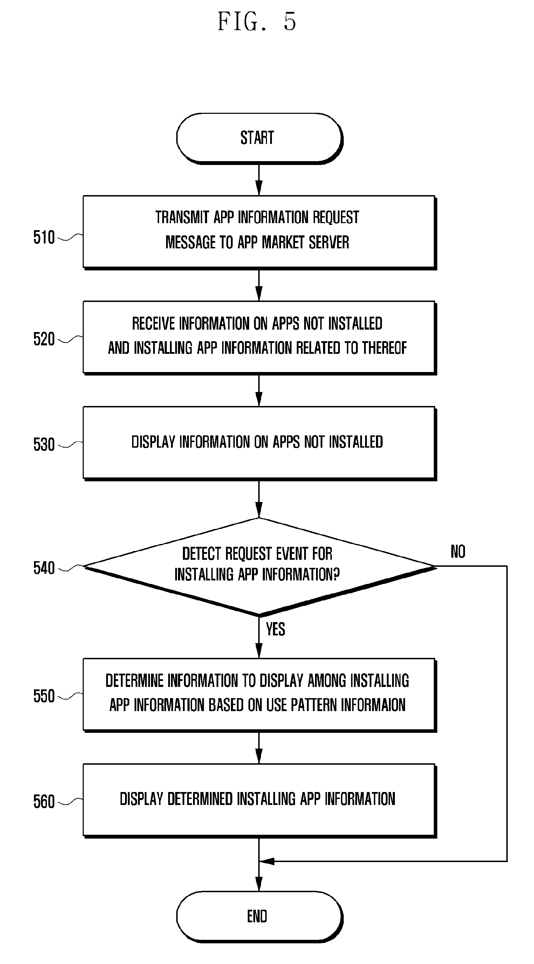

FIG. 5 is a flowchart illustrating a method of providing application information according to another exemplary embodiment of the disclosure.

Referring to FIG. 5, at operation 510, the controller 150 can control the wireless communication unit 140 to transmit an app information request message to an app market server.

At operation 520, the controller 160 receives the information on apps not installed and installing apps information related to the information on apps not installed from the app market server through the wireless communication unit 140.

At operation 530, the controller 160 can control the display unit 110 to display the received information on apps not installed.

At operation 540, the controller 160 detects an event requesting the installing app information.

Upon detecting the request event, at operation 550, the controller 160 can read use pattern information 131 from a memory 130, and determine information to display among the installing apps information by using the use pattern information 131. As described above, the use pattern information 131 can include recent use time, use frequency and the like for each installing app. For example, the controller 160 determines the installing app information which has most use frequency among the installing app information as information to display.

At operation 560, the controller 160 can control the display unit 110 to display the determined installing app information.

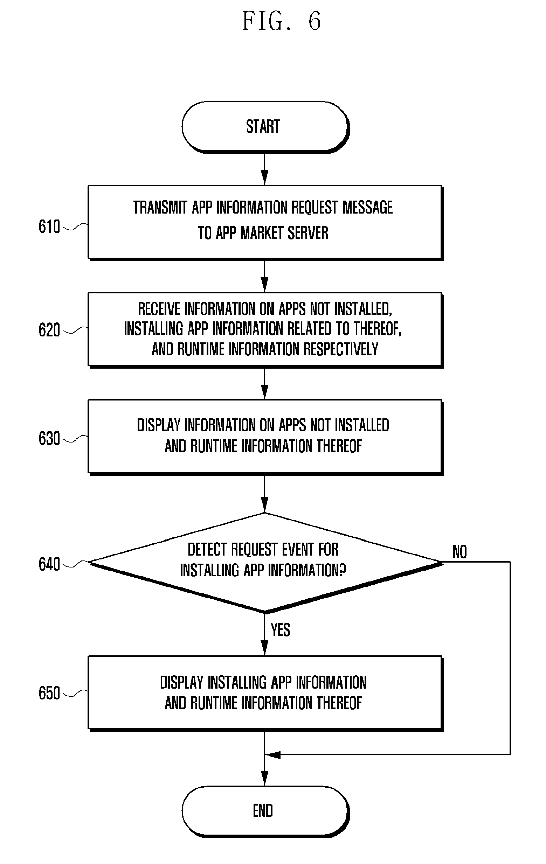

FIG. 6 is a flowchart illustrating a method of providing application information according to another exemplary embodiment of the disclosure.

Referring to FIG. 6, at operation 610, the controller 160 can control a wireless communication unit 140 to transmit an app information request message to an app market server.

At operation 620, the controller 160 receives the information on apps not installed, and installing app information related to the information on apps not installed, and runtime information on app not installed and installed app. The runtime information includes an execution environment of a corresponding app, that is, information indicating a native app or an open app.

At operation 630, the controller 160 can control a display unit 110 to display the information on apps not installed and environment information thereof. Referring to FIG. 3a, the display unit 110 displays "Angry bird 311" and an icon 311b which indicates that it is a native app operating based on a specific operating system.

At operation 640, the controller 160 detects an event requesting installing app information. Upon detecting the request event, at operation 650, the controller 160 can control the display unit 110 to display the installing app information and the runtime information thereof. Referring to FIG. 3b, the display unit 110 can display "Angry bird 321" and an icon 321a which indicates that it is a native app operating based on a web browser.

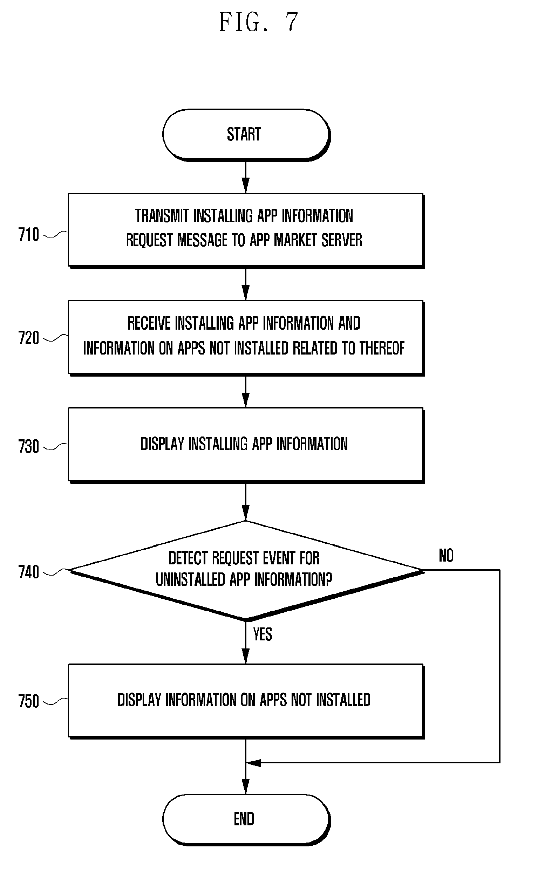

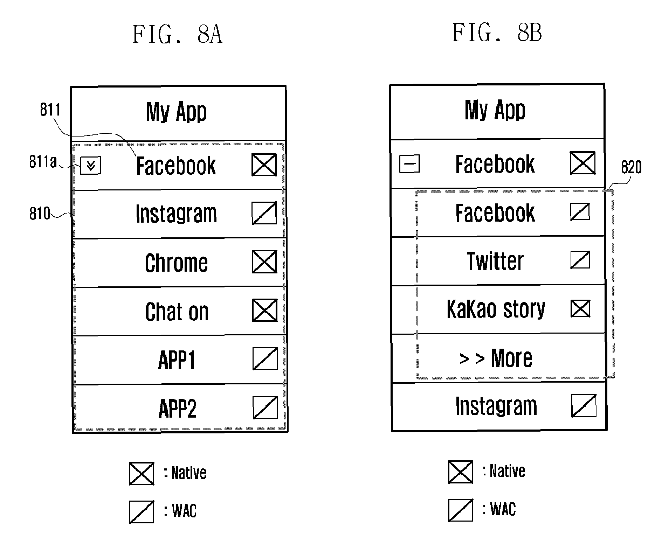

FIG. 7 is a flowchart illustrating a method of providing application information according to another exemplary embodiment of the disclosure. FIGS. 8A and 8B are diagrams for explaining display examples of application information.

Referring to FIG. 7, at operation 710, the controller 160 can control a wireless communication unit 140 to transmit an installing app information request message to an app market server. For example, when a user taps a purchase list button displayed on the display unit 110, a wireless communication unit 140 can transmit a message requesting for a purchase list to the app market server under control of the controller 160. In response, the app market server can transmit the purchase list and information on apps not installed related to installing app information which is included in the purchase list to mobile terminal 100.

At operation 720, the controller 160 receives the installing app information and the information on apps not installed based on the installing app information from the app market server through the wireless communication unit 140.

At operation 730, the controller 160 can control the display unit 110 to display the received installing app information. Referring to FIG. 8A, the display unit 110 displays a purchase list 810.

At operation 740, the controller 160 detects an event requesting information on apps not installed. Here, the request event can be a user's gesture on the touch screen 111 (e.g., a tap on "a view button 811a for display of the information on apps not installed" displayed on the display unit 110). In addition, the request event can be a key input event generated from a key input unit 120. In addition, the request event can be a voice data (e.g., "not installed").

Upon detection of the request event, at operation 750, the controller 160 can control the display unit 110 to display the information on apps not installed. Thus, the user can easily search the application not installed related to the installing app. Referring to FIG. 8B, the display unit 110 displays the not- installed app list 820 related to 'Face book 811'.

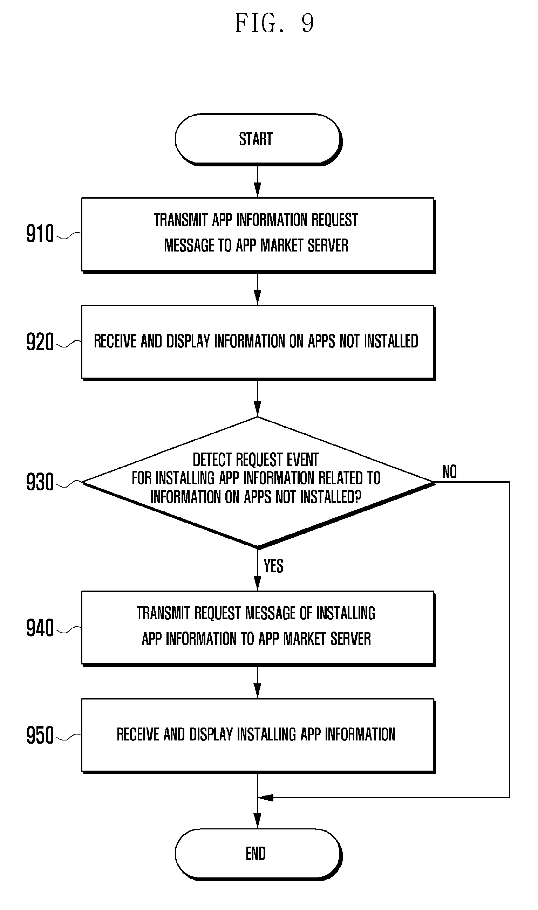

FIG. 9 is a flowchart illustrating a method of providing application information according to another exemplary embodiment of the disclosure.

Referring to FIG.9, at operation 910, the controller 160 can control the wireless communication unit 140 to transmit an app information request message to an app market server.

At operation 920, the controller 160 receives information on apps not installed from the app market server through the wireless communication unit 140 and controls a display unit 110 to display the information on apps not installed.

At operation 930, the controller 160 detects an event requesting the installing app information related to the displayed information on apps not installed.

The request event can be a user's gesture on the touch screen 111, (e.g., a tap on "a view button 311a for display of the installed app information" displayed on the display unit 110). In addition, the request event can be a key event generated from a key input unit 120. The request event can be a voice data.

Upon detecting the request event, at operation 940, the controller 160 can control the wireless communication unit 140 to transmit a message requesting the installing app information to the app market server. At operation 950, the controller 160 can control the display unit 110 to display the installing app information received from the app market server through the wireless communication unit 140.

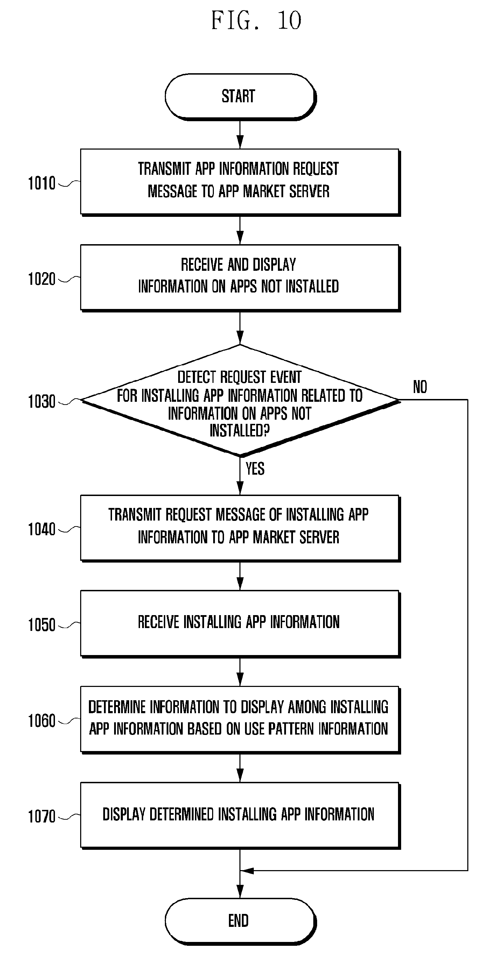

FIG. 10 is a flowchart illustrating a method of providing application information according to another exemplary embodiment of the disclosure.

Referring to FIG. 10, at operation 1010, the controller 160 can control a wireless communication unit 140 to transmit an app information request message to an app market server. At operation 1020, the controller 160 can control the display unit 110 to display the information on apps not installed, received from the app market server through the wireless communication unit 140. At operation 1030, the controller 160 detects an event requesting installing apps information related to the displayed information on apps not installed. Upon detecting the request event, at operation 1040, the controller 160 can control the wireless communication unit 140 to transmit an installing app information request message to the app market server.

At operation 1050, the controller 160 receives installing apps information from the app market server through the wireless communication unit 140. At operation 1060, the controller 160 reads use pattern information 131 from memory 130, and determines information to display among the installing apps information by using the use pattern information 131. At operation 1070, a controller 160 can control the display unit 110 to display the determined installing app information.

The foregoing method for providing application information of the disclosure can be implemented in an executable program command form by various computer means and be recorded in a computer readable recording medium. In this case, the computer readable recording medium can include a program command, a data file, and a data structure individually or a combination thereof. In the meantime, the program command recorded in a recording medium can be specially designed or configured for the present invention or be known to a person having ordinary skill in a computer software field to be used. The computer readable recording medium includes Magnetic Media such as hard disk, floppy disk, or magnetic tape, Optical Media such as Compact Disc Read Only Memory (CD-ROM) or Digital Versatile Disc (DVD), Magneto-Optical Media such as floptical disk, and a hardware device such as ROM. RAM, flash memory storing and executing program commands. Further, the program command includes a machine language code created by a complier and a high-level language code executable by a computer using an interpreter. The foregoing hardware device can be configured to be operated as at least one software module to perform an operation of the present invention.

According to a method for providing application information and a mobile terminal of this disclosure, it is provided that a user can intuitively understand which one is the corresponding application by additionally displaying installing application information related to the corresponding application when an application of an application market is display to a user.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for providing application information in a mobile terminal configured to access an application market server, the method comprising:
transmitting an application information request message to the application market server;
receiving information on applications not installed and at least one installing application information related to the information on the applications not installed from the application market server;
displaying the information on the applications not installed; and
detecting an request event which requests the installing application information; and
displaying the installing application information when the request event is detected.

2. The method of claim 1, further comprising:
determining information to display among the at least one installing information by using pre-stored use pattern information.

3. The method of claim 1, wherein installing application information comprises:
information related to an application which is received from the application market server and installed on the mobile terminal, and information related to an application which is deleted from the mobile terminal.

4. The method of claim 1, wherein the step of receiving information on applications not installed comprises:
receiving a first runtime information related to the information on the applications not installed and a second runtime information related to the installing application,
wherein displaying the information on the applications not installed comprises displaying the first runtime information,
wherein displaying the installing application information comprises displaying the second runtime information.

5. The method of claim 4, wherein the first runtime information and the second runtime information comprises:
information indicating a native application which operates based on a specific operation system and information indicating a web application which operates based on a web browser.

6. A method for providing application information in a mobile terminal configured to access an application market server, the method comprising:
transmitting an application information request message to the application market server;
displaying information on application not installed received from the application market server;
detecting a request event requesting installing application information;
determining an application related to the information on applications not installed among the applications installed on the mobile terminal when the event is detected; and
displaying the determined application information.

7. A method for providing application information in a mobile terminal configured to access an application market server, the method comprising:
transmitting a first request message requesting application information to the application market server;
displaying information on application not installed received from the application market server;
detecting a request event requesting installing application information based on the information on applications not installed;
transmitting a second request message requesting the installing application information based on the information on application not installed to the application market server when the request event is detected; and
displaying at least one installing application information received from the application market server.

8. A method for providing application information in a mobile terminal configured to access an application market server, the method comprising:
transmitting a first request message to request application information to the application market server;
displaying information on application not installed received from the application market server;
detecting a request event to request for installing application information based on the information on applications not installed;
transmitting a second request message to request for the installing application information related to the information on application not installed to the application market server when the request event is detected;
receiving at least one installing application information from the application market server;
determining an application(s) to display among the at least one installing application information by using pre-stored use pattern information; and
displaying information on the determined application(s).

9. A method for providing application information in a mobile terminal configured to access an application market server, the method comprising:
transmitting a request message to request installing application information to the application market server;
receiving the installing application information and at least one information on application not installed related to the installing application information from the application market server;
displaying the installing application information;
detecting a request event to request the information on application not installed; and
displaying the information on application not installed when the request event is detected.

10. A mobile terminal configured to access an application market server, the mobile terminal comprising:
a wireless communication unit configured to transmit an application information request message to the application market server, and to receive information on applications not installed and at least one installing application information related to the information on applications not installed from the application market server;
a display unit configured to display the information on application not installed;
an input unit configured to detect a request event to request the installing application information; and
a controller configured to control the display unit to display the installing application information when the request event is detected.

11. The mobile terminal of claim 10, further comprising:
a memory configured to store use pattern information,
wherein the controller is configured to determine information to display among the at least one installing application information by using the use pattern information.

12. The mobile terminal of claim 10, wherein the installing application information comprises:
information related to an application which is received from the application market server and installed on the mobile terminal, and information related to an application which is deleted from the mobile terminal.

13. The mobile terminal of claim 10, wherein the wireless communication unit is configured to receive a first runtime information related to the information on applications not installed and a second runtime information related to the installing application information, and the display unit is configured to display the first runtime information with the information on application not installed and the second runtime information with the installing application information.

14. The mobile terminal of claim 13, wherein the first runtime information comprises information indicating a native application which operates based on a specific operation system and the second runtime information comprises:
information indicating a web application which operates based on a web browser.

15. The mobile terminal of claim 10, wherein the input unit comprises at least one of a touch screen, a key input unit, and a microphone.
